(19) Europäisches Patentamt / European Patent Office / Office européen des brevets

(11) **EP 4 071 635 A1**

(12) **EUROPEAN PATENT APPLICATION**

(43) Date of publication:
**12.10.2022 Bulletin 2022/41**

(21) Application number: **22166645.6**

(22) Date of filing: **05.04.2022**

(51) International Patent Classification (IPC):
**G06F 16/583** (2019.01)

(52) Cooperative Patent Classification (CPC):
**G06F 16/583**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.04.2021 IT 202100008456**

(71) Applicants:
• **Rao, Marco**
  **00128 Roma (IT)**

• **Donzella, Anna**
  **00128 Roma (IT)**

(72) Inventor: **RAO, Marco**
  **00128 Roma (IT)**

(74) Representative: **Mannucci, Michele et al**
  **Ufficio Tecnico**
  **Ing. A. Mannucci S.r.l.**
  **Via della Scala, 4**
  **50123 Firenze (IT)**

(54) **METHOD FOR RECOGNIZING OR CLASSIFYING ITEMS**

(57) The method provides for acquiring a plurality of parameters of an item to be recognized or classified and associating a numerical value with each parameter of the item to be recognized or classified. A unique key is then created, associated with the item to be recognized or classified, based on the numerical values associated with the parameters of the item to be recognized or classified. The unique key comprises a concatenated sequence of parameters. The item is classified or recognized by comparing the unique key associated with te item to be recognized or classified with a plurality of previously stored unique keys.

Fig.3

EP 4 071 635 A1

## Description

TECHNICAL FIELD

The present invention relates to a method for recognizing or classifying items, and a system for implementing the method.

BACKGROUND ART

In many industrial applications there is the need to automatically recognize items of various kinds, for example for classifying them. There could be, for instance, the need to sort, by shape or dimensions, items coming from a production flow.

A further typical case where there is the need to recognize and classify items is the recognition of alphanumeric characters. In this case, the item to be recognized is not a physical product but the image of a character (numeric and/or alphabetical).

There are similar recognizing and/or classifying needs, for example, in analyzing images of various kinds, such as face pictures or diagnostic images (ultrasound, MR, radiographic, CAT images etc.), in audio track analysis for speech recognition, and in other similar tasks.

Many different methods are currently used for recognition/classification, all related to machine learning, such as deep learning, SVM - Support Vector Machines, and other known techniques.

US2008/003787 discloses a method for automatically classifying items in images. The system disclosed therein classifies the object of a target image based on the similarity of the target image with previously collected classified images. This prior art method uses complex algorithms requiring significant computational resources.

Even if, in many cases, the known methods allow obtaining accurate results, there is a continuous search for methods and systems that are more accurate and/or more efficient at reducing computational load and/or computation time, and therefore for methods allowing faster operation without loss of accuracy.

SUMMARY OF THE INVENTION

The new method for automatically recognizing or classifying items is implemented by running a program on a computer that performs a series of operations on parameters, which directly or indirectly represent physical features of the item and that can be expressed in numeric form.

In a first step, the method provides for acquiring a plurality of parameters of an item to be recognized or classified, and then associating a numerical value with each parameter of the item to be recognized or classified.

Based on these numerical values, the method provides for creating a unique key associated with the item to be recognized or classified. The unique key comprises a concatenated sequence of parameters, each of which is expressed by a number containing a plurality of digits. Once obtained, this unique key of the item to be recognized or classified is compared with a plurality of previously stored unique keys. The item is recognized or classified by comparing the unique key associated with the item to be recognized or classified and the previously stored unique keys.

As used herein, the expression "the item is recognized or classified" is used, as - according to the specific application -it can be required to recognize the item precisely or to sort it into classes according to the features thereof.

The step of creating the unique key associated with the item to be recognized or classified may comprise, in turn, a step of generating a primary string constituted by a sequence of parameters, here below referred to as "primary string parameters" or "primary string elements". Each primary string parameter is constituted by the numerical value associated with a respective parameter of the item to be recognized or classified; each primary string parameter is expressed by a plurality of digits. The parameters of the item to be recognized or classified may be, for instance, the 3D dimensions thereof. In this case, the primary string parameters or elements are numbers, each of which expresses the corresponding dimension of the item.

Moreover, the step of creating the unique key may comprise the step of generating a difference string using the primary string parameters. The difference string is constituted by a sequence of parameters or elements, here below referred to as "difference string parameters" or "difference string elements". Each difference string parameter is expressed by a plurality of digits.

The unique key is therefore obtained, for instance, by concatenating the primary string and the difference string.

Here below, various criteria and methods will be disclosed for calculating the difference string parameters. Generally, according to embodiments described herein, the difference string parameters are calculated iteratively.

In some embodiments, in each iterative cycle the iterative process uses the difference string parameter calculated in the previous iterative cycle and a primary string parameter following the primary string parameter used in the previous iterative cycle. The first difference string parameter may be obtained through the first two primary string parameters.

Moreover, each difference string parameter calculated in each iterative cycle expresses a value that is function of, i.e., is indicative of, the difference, and conversely the similarity, between the difference string parameter calculated in the previous iterative cycle and the subsequent parameter of the primary string.

In other embodiments, to obtain the difference string a preliminary step is performed of aggregating primary string parameters to obtain an aggregated parameter sequence the aggregated parameter sequence contains, in this case, a smaller number of parameters than the number of parameters of the primary string.

Then, the difference string parameters are calculated iteratively, using in every iterative cycle the difference string parameter calculated in the previous iterative cycle and an aggregated parameter next to the aggregated parameter used in the previous iterative cycle. The first difference string parameter may be obtained from the first two aggregated parameters of the aggregated parameter sequence.

In practical embodiments, the difference string parameter calculated in each iterative cycle expresses a value that is function of, i.e., is indicative of, the difference, and conversely the similarity, between the difference string parameter calculated in the previous iterative cycle and the subsequent parameter of the aggregated parameter sequence.

In currently preferred embodiments, each primary string parameter, each difference string parameter, and each parameter of the aggregated parameter sequence is expressed by bits.

In some embodiments, the step of comparing the unique key associated with the item to be recognized or classified and the plurality of previously stored unique keys comprises the step of comparing each digit of the unique key of the item to be recognized or classified and the corresponding digit of each stored unique key, and identifying, for each previously stored unique key compared with the unique key of the item to be recognized or classified, the number of pairs of equal digits.

The method may further comprise a step of calculating an index of similarity between the unique key of the item to be recognized or classified and each previously stored unique key; wherein the similarity index is proportional to the number of pairs of equal digits in equal positions identified in the unique key of the item to be recognized or classified and in the respective previously stored unique key.

In this case, in some embodiments the item to be recognized or classified is identified as corresponding to the item associated with the previously stored unique key having the higher similarity index with respect to the unique key of the item to be recognized or classified.

In some embodiments, a generic parameter $i^{th}$ of the difference string is defined by a function F

$$D_i = F[D_{i-1}; f_{i+1}(SBP)]$$

where $D_{i-1}$ is the difference string parameter calculated in the previous iterative cycle, and $f_{i+1}(SBP)$ is alternatively the primary string parameter $(i+1)^{th}$ or an aggregated parameter $(i+1)^{th}$ of an aggregated parameter sequence obtained by aggregating primary string parameters.

The first difference string parameter is defined by:

$$D_i = F[f_1(SBP); f_2(SBP)]$$

Further characteristics and embodiments of the method according to the present invention will be described hereunder and will be set forth in the appended claims, which form an integral part of the present description.

BRIEF DESCRIPTION OF THE DRAWING

The invention will be better understood by following the description below and the attached drawings, showing a non-limiting embodiment of the invention. More specifically, in the drawing:

Fig.1 shows a generic item to be recognized, characterized by a plurality of parameters;
Fig.2 shows a system for classifying items in a production line,
Fig.3 shows a scheme for recognizing alphanumeric characters.

DETAILED DESCRIPTION

Here below, reference is made to some specific applications of the method according to the invention applied to items constituted by physical entities, such as 3D articles or images. However, it should be understood that the method disclosed herein can be used to recognize and/or to classify items, i.e. entities, of any kind, real or virtual, every time the item can be characterized by a plurality of parameters that can be represented in numeric form, for instance (even not exclusively) using a binary system.

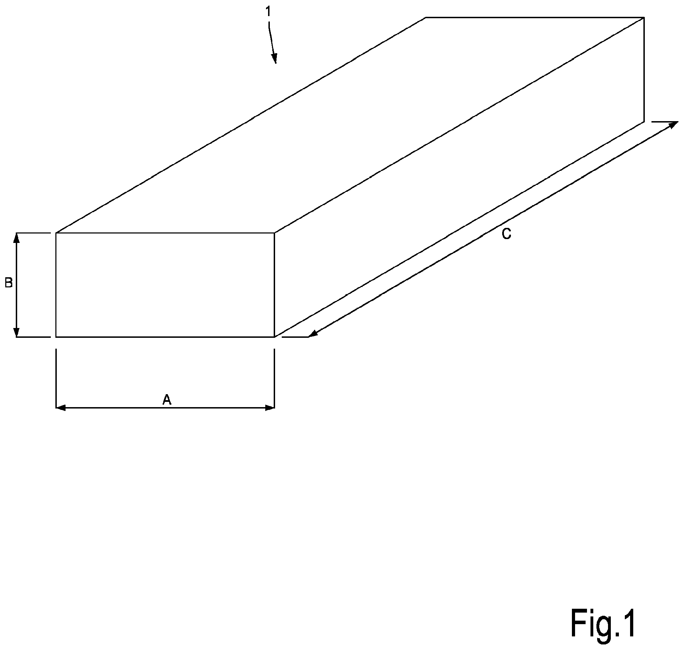

Fig.1 schematically shows a 3D physical item characterized by three-dimension parameters (height, width, depth) that are generically indicated with A, B, and C. Here below, the recognition method will be described with reference to simple items of this kind. However, it will be clear to those skilled in the art that the principles disclosed herein with reference to simple items characterizable by three parameters can also be applied to the recognition and/or classification of items as broadly defined above, even significantly more complex and characterizable by a very high number of parameters.

Briefly, based on the parameters A, B, C characterizing an item, the method disclosed herein generates a unique key constituted by a numeric string, which is compared with a plurality of unique keys previously calculated for a plurality of known, or previously analyzed and classified, items. The unique key is so calculated as to constitute a unique footprint of the item, so that similar items have similar footprints (unique keys) and that the greater the similarity between calculated keys, the greater the similarity between items.

In this way, the item to be recognized or classified is recognized, or sorted into a group of similar items, based on a comparison between the unique key calculated for the item to be classified and the unique keys of items acquired and/or classified previously, for example during a step of supervised or unsupervised learning.

With reference to the specific example of Fig.1, assuming that A, B, and C are the parameters characterizing the item 1, an acquisition system performs a preliminary step of acquiring the parameters A, B, and C. To this end it is possible, for example, to direct the item 1 according to one of the three main dimensions and to scan it through a scan system, e.g., a laser system, in order to measure the dimensions A, B, and C. In other embodiments, it is possible to acquire one or more images of the item directed in a preset manner, and to obtain the dimensions A, B, and C by processing the acquired image(s).

Each dimension A, B, and C may be represented by a number in decimal, binary or other systems. In this description reference is made to a binary system, as it is a particularly advantageous system for performing the method using a computer. Therefore, in the description below reference is made to digits, strings, sequences, matrices and other sets of numbers indicated as "binary". However, this is only a non-limiting and currently preferred example of embodiment.

The number of binary digits for expressing each parameter A, B, and C may be chosen, for example, based on the desired resolution. Generally speaking, if M is the number of digits (e.g. of "0" and "1", in the case of binary) used to express each parameter, and N is the overall number of parameters characterizing an item 1 to be classified, (N=3 in the example of Fig.1), based on the acquired parameters it is possible to organize data expressing the parameters as a NxM matrix, wherein each row is the string or sequence of binary digits representing one of the parameters characterizing the item 1 to be recognized or classified.

Indicating with $IB_i$ the sequence of binary digits representing the $i^{th}$ parameter, the following is obtained:

$$IB_i = [\alpha_{i1}, \ldots, \alpha_{ij}, \ldots, \alpha_{iM}] \quad IB_i = [0, \ldots, 0, \ldots, 1] \tag{1}$$

By arranging the sequences (1) in a matrix, the following matrix of binary sequences with dimensions NxM is obtained:

$$IB = \begin{bmatrix} \alpha_{11} & \cdots & \alpha_{1M} \\ \vdots & \ddots & \vdots \\ \alpha_{N1} & \cdots & \alpha_{NM} \end{bmatrix} \tag{2}$$

In the illustrated example, N = 3.

From the elements of the matrix *IB,* through the steps described below, a string of digits (binary digits, in the illustrated example) is obtained that characterizes the item 1, constituting its unique key or footprint. The comparison between the unique key calculated for the item 1 and the unique keys of items already classified or recognized during a previous step of learning and/or use of the method, allows item 1 to be recognized or classified.

In some embodiments, once the matrix *IB* has been obtained, a primary string is generated, here below referred to as "binary primary string" *SBP.* In practice, the binary primary string is constituted by the sequential concatenation of the rows of the matrix *IB* as follows:

$$SBP = [\alpha_{11}, \ldots, \alpha_{1M}, \ldots, \alpha_{N1}, \ldots, \alpha_{NM}] \tag{3}$$

The term "binary" indicates in this case that the single parameters are expressed by binary digits. However, as mentioned above, this is not strictly necessary. The parameters constituting the single rows $IB_i$ of the matrix $IB$ are therefore sequentially concatenated in a single binary primary string *(SBP)*, arranged adjacent so as to form a unique key. For example, in the illustrated case of three parameters, each of which is expressed by a binary number of four digits, assuming for instance

$$IB_1 = 0010$$

$$IB_2 = 0101$$

$$IB_3 = 0001$$

that constitute the following matrix *IB*

$$IB = \begin{bmatrix} 0 & 0 & 1 & 0 \\ 0 & 1 & 0 & 1 \\ 0 & 0 & 0 & 1 \end{bmatrix}$$

the following binary primary string is obtained:

$$SBP = 0\ 0\ 1\ 0 \quad 1\ 0\ 1\ 0 \quad 0\ 0\ 0\ 1$$

From the binary primary string *SBP* a difference string is calculated. As will be apparent from the description below, the difference string may be calculated in different ways, for example by subtractions. In further embodiments, each parameter of the difference string is obtained by a comparison, the result whereof depends on the greater or smaller similarity between the compared parameters. In a further embodiment, for example, each of the difference string elements or parameters is obtained by a bitwise comparison of binary numbers represented by sequences of "1" and "0".
In general, each of the difference string elements or parameters is obtained by an operation that is iteratively performed on the previously calculated parameter of the difference string and the subsequent parameter of the binary primary string. Instead of directly using the binary primary string elements or parameters for calculating the difference string, in some embodiments an aggregated parameter sequence is created, wherein each parameter of the aggregated parameter sequence is obtained by combining or aggregating, according to a suitable criterion, parameters of the binary primary string. Examples of possible aggregated parameters and the advantages of the use thereof are described further below with reference to the specific case of recognition of graphic symbols through image pixels.
In an embodiment, each parameter or element $i^{th}$ of the difference string is iteratively defined as follows

$$D_i = (D_{i-1} - IB_{i+1}) \qquad\qquad (4)$$

wherein the difference string first parameter is defined by $D_1 = IB_1 - IB_2$
For instance, if:

$$IB_1 = [\alpha_{11}, \alpha_{12}, \alpha_{13}, \alpha_{14}] = \text{"0101"}$$

$$IB_2 = [\alpha_{21}, \alpha_{22}, \alpha_{23}, \alpha_{24}] = \text{"0000"}$$

$$IB_3 = [\alpha_{31}, \alpha_{32}, \alpha_{33}, \alpha_{34}] = \text{"0001"}$$

the difference string contains the following two parameters:

$$D_1 = \delta_{11}, \delta_{12}, \delta_{13}, \delta_{14} = \text{"0101"} - \text{"0000"} = \text{"0101"}$$

$$D_2 = \delta_{21}, \delta_{22}, \delta_{23}, \delta_{24} = \text{"0101"} - \text{"0001"} = \text{"0100"}$$

and thus

$$D = D_1; D_2 = 0101; 0100$$

The difference string D contains a number of parameters smaller than N and particularly contains (N-1) = P parameters, with an overall number of digits equal to PxM, where M is the number of digits used to express each parameter of the difference string (in the example, equal to the number of digits used to express each parameter of the binary primary string *SBP*).

For reasons that will be clearly apparent from the description below of the subsequent steps of the method, each parameter $D_i$ of the difference string shall have the same number of digits. To this end, in some cases it is necessary to provide for a more complex expression of the single element or parameter $D_i$ of the difference string, so that the overall number of digits required to express each element or parameter $D_i$ does not vary, particularly does not increase in the difference string. In other embodiments, a preset length is given to each parameter $D_i$, imposing a number of digits "0" on the left of each parameter $D_i$ calculated according to the iterative formula (4), this number being variable so that the overall number of digits of each parameter $D_i$ is constant in the whole difference string.

In some embodiments, to keep the number of digits expressing each parameter $D_i$, constant, instead of the simple iterative formula (4) the following formula is used:

$$D_i = (ABS(D_{i-1}) - IB_{i+1}) \qquad (5)$$

where $ABS(D_{i-1})$ is the absolute value of $D_{i-1}$.

According to the value of the single parameters represented by the elements or parameters $IB_j$ of the binary primary string *SBP*, even using the formula (5) for calculating the difference string elements or parameters $D_j$, values can be achieved such that it is necessary to increase the number of digits expressing $D_j$ as j increases. To avoid this, in some embodiments each value $D_j$ is truncated at a fixed number of digits starting from the rightmost digit, setting in advance the maximum number of digits for representing each element or parameter $D_j$ of the difference string.

For instance, assuming to set a maximum of four digits (binary digits, in the example described herein) for representing each element or parameter $D_j$ of the difference string, and assuming

$$D_{i-1} = 0100$$

$$IB_{i+1} = 1111$$

then:

$$D_i = (ABS(D_{i-1}) - IB_{i+1}) = 0100 - 1111 = \text{-}01011 \qquad (5')$$

and the value of $D_i$ is expressed, in this case, by the first four digits on the right, truncating the value calculated in (5'), i.e. $D_i$ = -1011.

In the above-mentioned examples, the difference string elements or parameters are calculated as actual numerical differences, adopting, if necessary, criteria for keeping the length in digits of each element or parameter always the same; however, this is not the only possible approach. In fact, from a conceptual viewpoint what is important to obtain from the elements or parameters constituting the binary primary string is a piece of information indicative of the differences, not necessary in numerical terms, between adjacent parameters $IB_j$ of the string.

A modified embodiment of this type is described below. According to this embodiment, the difference string D is obtained as follows.

The first parameter $D_1$ of the difference string D is obtained by comparing the digits constituting the first two

elements or parameters $IB_1$ and $IB_2$ of the binary primary string *SBP*. Particularly, the first parameter $D_1$ is constituted by a sequence of two symbols, whose number is equal to the number of digits expressing $IB_1$ and $IB_2$. For the sake of simplicity of explication and realization, the symbols are "1" and "0". Therefore, the first difference string parameter $D_1$ is constituted by a sequence of symbols "0" and "1", whose number is equal to M, having assumed that each parameter $IB_j$ of the binary primary string *SBP* contains M digits, see Eq. (1).

A law is defined for attributing to each $i^{th}$ symbol of the string first parameter $D_1$ the value "1" or the value "0". By way of example, the symbol in the $i^{th}$ position of $D_1$ is equal to "1" if the two symbols in the $i^{th}$ position of $IB_1$ and $IB_2$ are equal. Vice versa, the symbol in the $i^{th}$ position of $D_1$ is equal to "0" if the two symbols in the $i^{th}$ position of $IB_1$ and e $IB_2$ differ from each other. For instance, if

$$IB_1 = 0000 \quad IB_2 = 0101$$

then

$$D_1 = 1010$$

It should be understood that also the opposite rule can be adopted for attributing the value "0" or "1" to each bit or digit of $D_1$. In this case, if

-

$$IB_1 = 0000 \quad IB_2 = 0101$$

then

$$D_1 = 0101$$

Each of the single elements or parameters of the difference string following the first one is constituted by M digits obtained from the criterion described above applied to the comparison between the difference string parameter calculated in the previous iterative cycle (parameter $D_{i-1}$) and the SBP parameter ($IB_{i+1}$) following that used for calculating the difference string parameter $D_{i-1}$ calculated in the previous iterative cycle. For the generic parameter or element $D_i$:

$$D_i = \delta_{i1}, \delta_{i2}, \ldots \delta_{ij}, \ldots \delta_{iM}$$

the single values $\delta_{ij}$ are defined by the following law

$$\delta_{ij} = 1 \qquad if\ \delta_{(i-1)j} = \alpha_{(i+1)j}$$

$$\delta_{ij} = 0 \qquad if\ \delta_{(i-1)j} \neq \alpha_{(i+1)j} \tag{6}$$

For instance, if

$$D_{(i-1)} = 1001$$

$$IB_{(i+1)} = 0011$$

then

$$D_i = 0101$$

As an alternative to Eq. (6), the values of the digits defining each parameter Di of the difference string may be defined by:

$$\delta_{ij} = 1 \qquad\qquad if\ \delta_{(i-1)j} = \alpha_{(i+1)j}$$

$$\delta_{ij} = 0 \qquad\qquad if\ \delta_{(i-1)j} \neq \alpha_{(i+1)j} \tag{6'}$$

Independently of the technique used to obtain a difference string D constituted by parameters that are all expressed by the same number of digits, essentially the difference string D contains in each position $i^{th}$ a parameter that is function of, i.e. indicative of, the difference or similarity between the $(i-1)^{th}$ parameter of the difference string calculated in the previous cycle and the subsequent parameter $(i+1)^{th}$ of the binary primary string.

At the subsequent step, from the binary primary string *SBP* and the difference string D a unique key *CU is* obtained, characterizing the item 1 to be classified. This unique key is obtained by sequentially concatenating the elements or parameters constituting the binary primary string *SBP* and the elements or parameters constituting the difference string D. The unique key CU of an item defined by N parameters, each of which expressed by M digits, is:

$$CU = [\alpha_{11}, \ldots, \alpha_{1M}, \ldots, \alpha_{N1}, \ldots, \alpha_{NM}\ ], [D_1, \ldots, D_P] \tag{7}$$

where each difference *Dj* is in turn expressed by a given number of digits that can be equal to M or different from M, for instance equal to R, i.e.:

$$D_i = \delta_{i1}, \delta_{i2}, \ldots\ldots\delta_{iR}, \tag{8}$$

and thus:

$$CU = [\alpha_{11}, \ldots, \alpha_{1M}, \ldots, \alpha_{N1}, \ldots, \alpha_{NM}\ ], [\delta_{11}, \delta_{12}, \ldots \delta_{1R}, \delta_{21} \ldots, \delta_{PR}] \tag{9}$$

In general, for a $j^{th}$ item a unique key $CU_j$ is obtained that is expressed by the following string:

$$CU_j = [\alpha_{11j}, \ldots, \alpha_{1Mj}, \ldots, \alpha_{N1j}, \ldots, \alpha_{NMj}\ ],\ [D_{1j}, \ldots, D_{Pj}] \tag{10}$$

i.e.:

$$CU_j = [\alpha_{11j}, \ldots, \alpha_{1Mj}, \ldots, \alpha_{N1j}, \ldots, \alpha_{NMj}\ ], [\delta_{11j}, \delta_{12j}, \ldots \delta_{1Rj}, \delta_{21j} \ldots, \delta_{PRj}] \tag{11}$$

representing a sequence of digits (binary digits in the illustrated example) that essentially constitutes a footprint of the item to be recognized or classified.

The item is recognized or classified by comparing the unique key *CU* thereof and unique keys of items acquired or classified previously, for example during a step of supervised or unsupervised learning. The unique key of a recognized or classified item enlarges the set of keys to be used for classifying or recognizing subsequent items.

In general, for Z items a matrix C is formed, as defined below:

$$C = concatenate\left(\begin{bmatrix} [\alpha_{111}, \ldots, \alpha_{1M1}, \ldots, \alpha_{N11}, \ldots, \alpha_{NM1}] \\ \ldots \\ [\alpha_{11Z}, \ldots, \alpha_{1MZ}, \ldots, \alpha_{N1Z}, \ldots, \alpha_{NMZ}] \end{bmatrix}, \begin{bmatrix} D_{11} & \cdots & D_{1P} \\ \vdots & \ddots & \vdots \\ D_{Z1} & \cdots & D_{ZP} \end{bmatrix}\right) = \begin{bmatrix} CU_1 \\ \ldots \\ CU_Z \end{bmatrix}$$

$$\tag{12}$$

where, as indicated above, each element or parameter $D_{ij}$ of the second matrix is in turn constituted by a number R of digits.

The matrix C can be used for a supervised or unsupervised learning process, wherein, using the unique keys *CU* of a plurality of items, the system learns to classify correctly any subsequent item, substantially represented by the unique key *CU* thereof, as defined above.

The recognition or classification process implies a continuous increase in the number of unique keys forming the matrix C defined in (12). In other words, the recognition or classification process entails a continuous update of the matrix *C* to make the process of recognition or classification of subsequent items increasingly fine.

For recognizing or classifying an item, of which the unique key *CU* has been determined, it is possible to compare the unique key *CU* of the item 1 to be recognized or classified and all other unique keys present in the matrix *C* (Eq. 12) at the current comparison moment. Assuming to have a number Z of unique keys $CU_j$ (from $CU_1$ to $CU_Z$), each of which corresponds to a given item, an item $(Z+1)^{th}$ is recognized by calculating the unique key $CU_{Z+1}$ thereof as described above, and then comparing the unique key $CU_{Z+1}$ and each of the Z unique keys from $CU_1$ to $CU_Z$ forming the matrix C (Eq. 12).

The item is recognized as equal to that item, the unique key $CU_k$ of which is present in the matrix C, the unique key $CU_k$ of which is more similar to the unique key $CU_{Z+1}$ of the item $(Z+1)^{th}$.

In some embodiments, the unique key $CU_k$ of the matrix C that is more similar to the unique key $CU_{Z+1}$ calculated for the $(Z+1)^{th}$ item 1 is identified by calculating a similarity index $IS_{i,Z+1}$ (i from 1 to Z) between the key $CU_{Z+1}$ and each key $CU_j$ (j from 1 to Z) contained in the matrix C.

More in particular, in some embodiments by comparing the unique key $CU_{Z+1}$ and each unique key $CU_j$ (j from 1 to Z), Z similarity indexes ($IS_{i,Z+1}$) are obtained. Each similarity index is formed by comparing each digit (bit) of the unique key $CU_{Z+1}$ of the item $(Z+1)^{th}$ to be recognized or classified and each bit of each unique key from $CU_1$ to $CU_Z$ contained in the matrix *C* of the Eq. (12). The similarity index may be obtained, for instance, by creating a comparison string giving the value "1" to each pair of equal bits and the value "0" to each pair of different bits, and then calculating the overall number of bits equal to "1" in the comparison string as follows

$$IS_i \alpha_i \{CU_i, CU_j\} = \begin{vmatrix} = 1 \ se \ \alpha_i\{CU_i\} = \alpha_j\{CU_j\} \\ = 0 \ se \ \alpha_i\{CU_i\} \neq \alpha_j\{CU_j\} \end{vmatrix} \tag{13}$$

For example,

| unique key $CU_{Z+1}$ | 1 | 0 | 1 | 1 | 0 | 0 | 0 | 0 | 0 | 0 | 0 |
|---|---|---|---|---|---|---|---|---|---|---|---|
| unique key $CU_j$ | 0 | 0 | 1 | 0 | 1 | 1 | 0 | 0 | 1 | 0 | 1 |
| comparison | 0 | 1 | 1 | 0 | 0 | 0 | 1 | 1 | 0 | 1 | 0 |

The similarity index is equal to 5, as in the comparison string there are five bits equal to "1", i.e. pairs of bits of the compared unique keys have bits equal to one another.

In the following case:

| unique key $CU_{Z+1}$ | 1 | 0 | 1 | 1 | 0 | 0 | 0 | 0 | 0 | 0 | 0 |
|---|---|---|---|---|---|---|---|---|---|---|---|
| unique key $C_h$ | 0 | 1 | 0 | 1 | 1 | 0 | 0 | 1 | 1 | 1 | 1 |
| comparison | 0 | 0 | 0 | 1 | 0 | 1 | 1 | 0 | 0 | 0 | 0 |

the similarity index is equal to 3.

The item 1 is identified as corresponding to that whose unique key *CU* contained in the matrix *C* has the higher similarity index in the comparison.

From the description above it is clearly apparent that each parameter or element of the binary primary string *SBP* and each parameter or element of the difference string D shall have, in each unique key *CU* of the matrix C and in the unique key of each item to be recognized, the same number of digits, in order for the comparison to be performed correctly. For this reason, as described above, measure are implemented in order that each parameter or element $D_i$ of the difference string is expressed by the same number R of bits or digits $\delta_{i1}, \delta_{i2}, ......... \delta_{iR}$.

The obtained similarity indexes can be inserted in a similarity matrix (MatSom), where the values related to the comparison between each unique key and all other unique keys are indicated. Given an overall number Z of examined items, the number of the generated unique keys CU is Z and the matrix MatSom shall thus compare each of the Z keys with all others keys.

Symbolically:

$$MatSom = \begin{bmatrix} IS_{11} & \cdots & IS_{1Z} \\ \vdots & \ddots & \vdots \\ IS_{Z1} & \cdots & IS_{ZZ} \end{bmatrix} \qquad (14)$$

It is not necessary that each item 1 is recognized based on the punctual comparison of the unique key $CU$ thereof with all previously calculated unique keys. The aim of comparison could also be to classify the item 1 into a class selected from a limited number of classes, into which the items shall be sorted.

In this case, synthetic similarity indexes can be obtained for groups or classes of items, expressed as aggregation of the similarity indexes on the domain Z. The result is the generation of a set of clusters, containing items characterized by a specific similarity index reasonably comprised in a relatively limited range within each cluster and relatively different between different clusters.

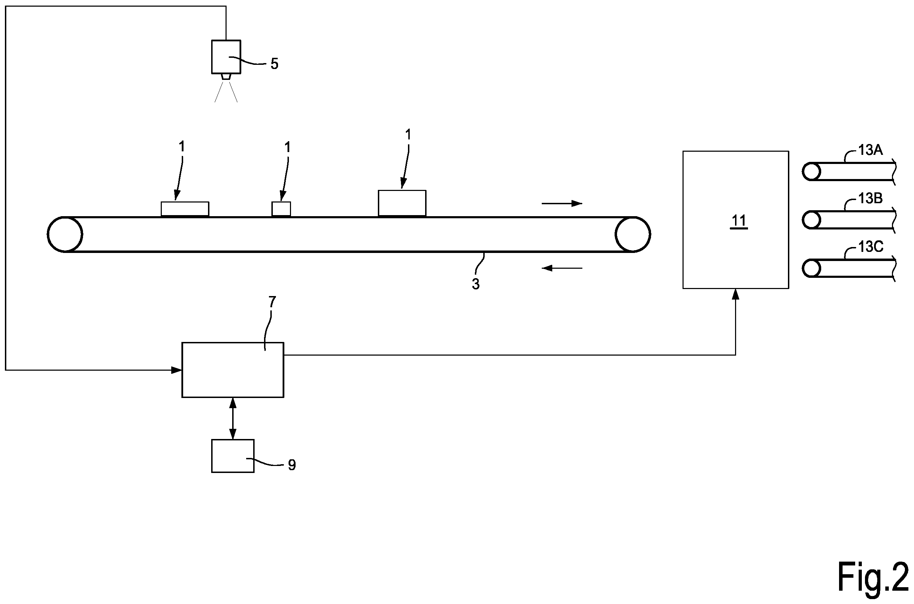

Fig.2 schematically shows a portion of a line for producing items 1 associated with a recognition system using the method described above. The system comprises a conveyor 3 along which the items 1 move forwards, suitably pre-directed in a known and therefore not illustrated manner. A vision or scanning system 5 is associated with the conveyor 3. For example, the system 5 comprises one or more cameras, one or more laser scanning systems, or in general members adapted to acquire the dimensions A, B, and C of the items 1 moving forwards along the conveyor 3.

The acquired data are transferred to a processing unit 7 associated with one or more memory units schematically indicated by the block 9. The processing unit 7 is configured to implement the method described above. The unique keys calculated during the learning step or during operation are stored in the block 9.

If the system 5 comprises scanning devices detecting the dimensions A, B, and C of the items 1, the processing unit directly receives the values of A, B and C. In further embodiments, the system 5 comprises one or more cameras acquiring images of the items 1. By processing the images, the parameters are obtained constituted by the dimensions A, B and C of the items. The images can be processed by the processing unit 7 or any other device intended for this function.

In further embodiments, for example, the dimensions A, B, and C are communicated directly by a NC machine tool that has produced the item 1.

Once the processing unit 7 has recognized the item 1 by using the method according to the invention, the piece of information obtained can be used in different ways. Just by way of example, in Fig.2 the piece of information is used to manage a device, indicated schematically with 11, sorting the items 1 coming from the conveyor 3 to either conveyor of a plurality of conveyors 13A, 13B, 13C. The conveyors 13A, 13B, 13C may be used to convey items to further processing and/or packaging stations.

The described device and method can be used, for example, for sorting items by dimension and delivering them to different processing or packaging stations according to the dimensions A, B, and C.

As mentioned, the described method can be used for a multiplicity of applications requiring to recognize or to classify items of different kind, wherein "item" means any entity that can be represented by a plurality of parameters that can be expressed by a certain number of digits of a system of numbers (preferably, but not necessarily, a binary system).

In this sense, the described method is a valid alternative to the recognition systems based on traditional approaches, particularly those using neural networks.

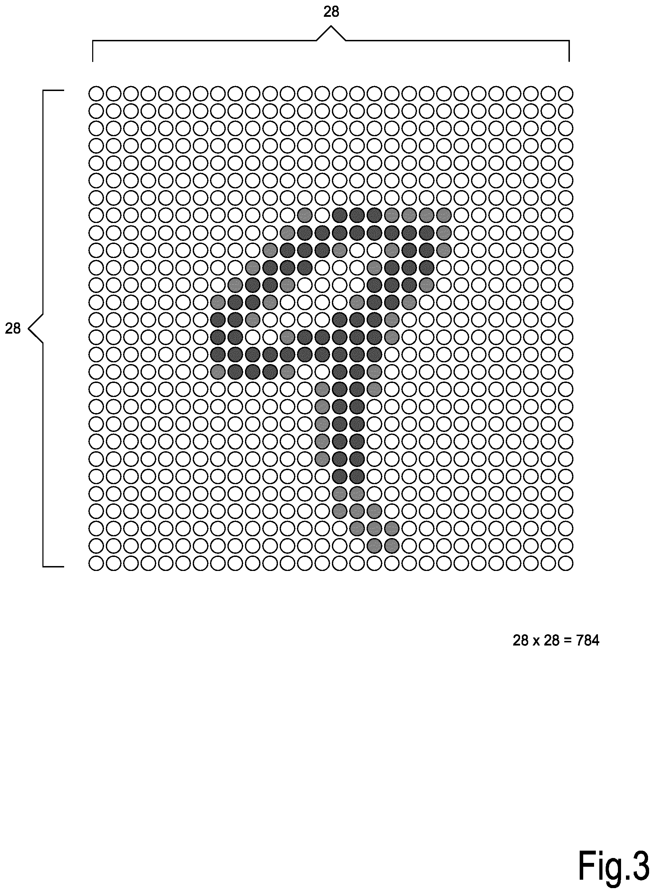

The method according to the invention may be used, for instance, for recognizing alphanumerical characters. Fig.3 shows a screen subdivided into a matrix of 28x28 pixels, on which an alphanumerical character is represented, in this specific example the handwritten digit "9". Those skilled in the art know the method for recognizing the alphanumerical character using a neural network. The indicated number of pixels is merely by way of example. In other embodiments, a higher or lower number of pixels can be provided and even a number of pixel columns different than the number of pixel rows. In general, the image can be reproduced on a number PoxPv of pixels, where Po is the number of pixels in each row and Pv is the number of pixels in each column.

The alphanumerical character can be recognized using the method of the invention as follows.

Firstly, the image is acquired of the alphanumerical character traced, for example handwritten, on a support (a blackboard, a paper sheet, etc.). The image is presented on a screen (Fig.3) with 28x28 (=784) pixels. An activation value is associated to each pixel, i.e., a numeric value indicating the pixel brightness (in this simplified example, the image is a grayscale image).

The 784 activation values, each of which can be expressed by a number comprising an amount M of binary digits, constitute, in this case, the input parameters of the item to be recognized or classified.

The binary primary string is therefore constituted by a sequence of groups of binary digits; each group expresses, in binary digits, the activation value of the respective pixel. Therefore, the binary primary string contains all activation values of the 784 pixels, arranged in sequence starting from the pixel in position 1,1 until the pixel in position 28,28 in the pixel matrix, on which the alphanumerical character to be recognized is reproduced.

At this point, the steps of the method described above with reference to the simplified example of three parameters A, B, and C are sequentially implemented. In this case, the matrix $C$ and the unique keys $CU_j$ are significantly larger, in terms of number of components, than in the previous example. However, the steps are conceptually identical to those previously described.

In a learning step, it is possible to make the system recognize a multiplicity of alphanumerical characters handwritten by different hands, so that the matrix $C$ contains a high number of unique keys from $CU_1$ to $CU_Z$, each of which is assigned to a character (for example from 0 to 9 and from A to Z). The higher the number of different hands examined for each character and the corresponding number of calculated unique keys $CU_j$, the greater the possibility the system has to correctly recognize, and thus to classify, one of the alphanumerical characters written by a hand different from all those examined during the learning step, and therefore not identical to any of the already examined characters, for which the unique key has been calculated.

As in the previous example, the alphanumerical character is recognized by comparing the unique key thereof and the unique keys of the matrix C, and detecting the higher similarity index.

In some embodiments, the steps of the recognition method can be reduced, thus reducing the computational load and making therefore the recognition faster. To this end, for calculating the difference string, aggregated parameters are used, each of which is obtained by aggregating a certain number of parameters of the binary primary string.

For instance, whilst the initial parameter of the matrix $IB$ (Formula 2) and of the binary primary string (Formula 3) may be the activation values of all image pixels, the difference string (Formulas (4) or (5) or (6) or (6')) may be calculated on aggregated values of the parameters forming the binary primary string $SBP$, in smaller number than the number of the image pixels. Particularly, the parameters of the binary primary string SBP may be combined or aggregated, for example added, to obtain an aggregated parameter sequence, each parameter of which is obtained by combining a given number of parameters of the binary primary string SBP.

In one embodiment, the aggregated parameters obtained by aggregating the parameters forming the binary primary string are calculated by adding together the activation values of each row, or of each column, of the 28x28 pixel matrix. In the general case of a PoxPv pixel matrix, Pv sum values are obtained, if the values have been added by rows; or Po sum values if the values have been added by columns.

The difference string elements or parameters are then calculated iteratively similarly to what already described above, but using the sums obtained by aggregating the activation values of the single rows or the single columns, i.e. using the aggregated parameter sequence instead of the parameters or elements of the binary primary string.

In the illustrated example, where the matrix is constituted by 28 rows and 28 columns, the number of aggregated parameters used for calculating the difference string is equal to 28, independently whether the sum is by row or column. The number of difference string elements or parameters is therefore 27.

Assuming to add by rows, each parameter used for the subsequent calculation of the difference string D is obtained as follows:

$$SR_j = \sum_{i=1}^{28} VA_{ij} \qquad (15)$$

where $VA_{ij}$ is the activation value of the $i^{th}$ pixel in the $j^{th}$ row and therefor $SR_j$ is the sum of the activation values of the 28 pixels of the row $j^{th}$

By analogy with the Eq. (4), the difference string elements or parameters are thus expressed by:

$$D_j = D_{j-1} - SR_{j+1} \qquad (16)$$

If necessary, in order that each of the difference string elements or parameters has an equal number of digits, by analogy with the Eq. (5), the parameters are expressed by:

$$D_j = ABS(D_{j-1}) - SR_{j+1} \qquad (17)$$

Instead of sums by rows, sums by columns may be used

$$SC_i = \sum_{j=1}^{28} VA_{ij} \qquad (18)$$

where $VA_{ij}$ is the activation value of the $i^{th}$ pixel in the $j^{th}$ row and therefore $SC_i$ is the sum of the activation values of the 28 pixels of the column $i^{th}$.

In general, the single elements or parameters of the difference string can be calculated with a formula of this type:

$$D_j = ABS(D_{j-1}) - F_{j+1} \qquad (19)$$

where each parameter $F_k$ is one of the sequential parameters of the binary primary string $SBP$, or an aggregated parameter of an aggregated parameter sequence, wherein each aggregated parameter is obtained by combining or aggregating (in the previous example, by adding) parameters of the binary primary string $SBP$, for example by combining or aggregating subsequent or sequential groups of parameters of the binary primary string $SBP$.

As already described, each difference string parameter $D_j$ is expressed by an equal number of digits. If necessary, in order that each parameter $D_j$ has the same number of digits, it is possible to truncate each parameter exceeding the preset number of digits.

Alternatively, the difference string parameters $D_j$ can be determined according to the Eq. (6) or (6'), by comparing each bit of the parameter $D_{j-1}$ and each bit of the element or parameter $SR_{j+1}$, or the element or parameter $SC_{j+1}$, where $SR_{j+1}$ is defined by the Eq. (15) in case of sum by rows, and $SC_{j+1}$ is defined by the Eq. (18) in case of sum by columns.

Both in case of sum by rows and sum by columns, each sum $SR_i$ or $SC_i$ is expressed by a plurality of digits, typically binary digits (0, 1), whose number is equal to the number of digits expressing each parameter Dj of the difference string. In this way, each parameter $D_j$ can be calculated iteratively based on the previously calculated parameter $D_{j-1}$ and based on $SR_{j+1}$, wherein $D_{j-1}$ and $SR_{j+1}$ (or $SC_{j+1}$) are expressed by the same number of (binary) digits.

Briefly, assuming to use the sums by rows of the activation values of the single pixels for calculating the difference string D, the unique key of an item constituted by an alphanumerical character represented on the 28x28 pixel matrix is given by:

$$CU = va_{1,1}, \, ...va_{i,j} \, ...va_{28,28}; \, d_1, \, d_2, \, .........d_{27},$$

where $va_{ij}$ is the activation value of the pixel in position ij, value that can be expressed by a suitable number of binary digits (for example four). The sequence $va_{1,1}, \, ... \, va_{28,28}$ is the binary primary string.

Moreover, $d_j$ is the jth element or parameter of the difference string. Each of these elements may be, in turn, expressed by a certain number of binary digits. The first element or parameter $d_1$ is obtained by a bitwise comparison of the sums $SR_1$ and $SR_2$ of the activation values of the first two rows. Each subsequent element or parameter $d_j$ of the difference string is obtained by a bitwise comparison of $d_{j-1}$ and $SR_{j+1}$ according to the criterion expressed by Eq. (6) or Eq. (6'), each parameter $d_j$ being expressed by the same number of digits as each parameter $SR_j$.

As indicated by Eq. (6) or (6'), the difference string element or parameter $d_j$ contains a sequence of "1" and "0" where: the digit "1" is attributed when the two compared bits of the elements or parameters $d_{j-1}$ and $SR_{j+1}$ are equal to each other, whilst the digit "0" is attributed when the two compared bits are different from each other.

As clearly apparent from the description of this embodiment, the two portions of the unique key $CU$ of an item are obtained from the same initial parameters, but the difference string may be calculated after having further processed the input parameters. Generally speaking, the difference string is therefore not necessarily constructed by comparing each value calculated in a previous iterative cycle with the value of a subsequent parameter of the binary primary string; a function of the binary primary string parameter may be used, for example a sum or another aggregated parameter obtained by combining parameters or elements of the binary primary string.

In general, the difference string is calculated using aggregated parameters constituted by a combination of binary primary string parameters. In the embodiments illustrated above, the aggregated parameters are obtained by adding binary primary string parameters.

This allows reducing the amount of data and therefore of calculations necessary for obtaining the unique key of the item to be recognized or classified. The smaller number of parameters that, in this case, define the difference string reduces the overall number of digits forming the unique key and therefore the overall number of comparisons that shall be performed between unique key of the item to be recognized or classified and previously calculated and acquired unique keys for calculating the similarity index.

**Claims**

1. An automatic method for recognizing or classifying items through a software running on a computer, the method comprising the following steps:

   acquiring a plurality of parameters of an item to be recognized or classified;

associating a numerical value with each parameter of the item to be recognized or classified;

creating a unique key associated with the item to be recognized or classified; wherein the unique key comprises a primary string constituted by a concatenated sequence of parameters of the primary string, the number of which is equal to the number of parameters of the item to be recognized or classified; wherein each primary string parameter is constituted by the numerical value associated with a respective parameter of the item to be recognized or classified, said primary string parameter being expressed by a number containing a plurality of digits;

comparing the unique key associated with the item to be recognized or classified and a plurality of previously stored unique keys, and recognizing or classifying the item based on the comparison between the unique key associated with the item to be recognized or classified and the previously stored unique keys.

2. The method of claim 1, wherein the step of creating the unique key associated with the item to be recognized or classified further comprises the steps of:

generating a difference string using the primary string parameters, wherein the difference string is constituted by a sequence of difference string parameters, each difference string parameter being expressed by a plurality of digits;

concatenating the primary string and the difference string, the unique key associated with the item to be recognized or classified being constituted by the primary string and the difference string concatenated with each other.

3. The method of claim 2, wherein each difference string parameter contains a piece of information indicative of the differences between adjacent parameters of the primary string.

4. The method of claim 2 or 3, wherein each difference string parameter is calculated iteratively, using in each iterative cycle the difference string parameter calculated in the previous iterative cycle and a primary string parameter subsequent to the primary string parameter used in the previous iterative cycle.

5. The method of claim 4, wherein the first difference string parameter is obtained through the first two parameters of the primary string.

6. The method of claim 4 or 5, wherein each difference string parameter calculated in each operative cycle expresses a value that is a function of the difference between the difference string parameter calculated in the previous iterative cycle and the subsequent parameter of the primary string.

7. The method of claim 3, comprising the step of aggregating primary string parameters to obtain an aggregated parameter sequence, the aggregated parameter sequence containing a number of parameters smaller than the number of primary string parameters; and wherein the difference string parameters are calculated iteratively, using in every iterative cycle the difference string parameter calculated in the previous iterative cycle and an aggregated parameter subsequent to the aggregated parameter used in the previous iterative cycle.

8. The method of claim 7, wherein the first difference string parameter is obtained through the first two aggregated parameters of the aggregated parameters sequence.

9. The method of claim 7 or 8, wherein each difference string parameter calculated in every iterative cycle expresses a value that is a function of the difference between the difference string parameter calculated in the previous iterative cycle and the subsequent parameter of the aggregated parameter sequence.

10. The method of one or more of the previous claims, where each primary string parameter and each difference string parameter is expressed by bits.

11. The method of one or more of the previous claims, wherein the step of comparing the unique key associated with the item to be recognized or classified and the plurality of previously stored unique keys comprises the following steps:

comparing each digit of the unique key of the item to be recognized or classified and the corresponding digit of each stored unique key;

identifying, for each previously stored unique key compared with the unique key of the item to be recognized or classified, the number of pairs of equal digits;

calculating a similarity index between the unique key of the item to be recognized or classified and each previously stored unique key; wherein the similarity index is proportional to the number of pairs of equal digits in equal positions identified in the unique key of the item to be recognized or classified and in the respective previously stored unique key;

wherein the item to be recognized or classified is preferably identified as corresponding to the item, with which the previously stored unique key is associated that has the higher similarity index with respect to the unique key of the item to be recognized or classified.

12. The method of one or more of the previous claims, wherein a generic parameter $i^{th}$ of the difference string is defined by a function F

$$D_i = F[D_{i-1}; f_{i+1}(SBP)]$$

where $D_{i-1}$ is the difference string parameter calculated in the previous iterative cycle, and $f_{i+1}(SBP)$ is alternatively the primary string parameter $(i+1)^{th}$ or an aggregated parameter $(i+1)^{th}$ of an aggregated parameter sequence obtained by aggregating primary string parameters.

13. The method of claim 12, wherein the difference string first parameter is defined by:

$$D_i = F[f_1(SBP); f_2(SBP)]$$

14. The method of claim 12 o 13, wherein each difference string parameter $D_i$ is defined by a plurality of bits

$$D_i = \delta_{i1}, \delta_{i2}, \ldots\ldots \delta_{ij}, \ldots.. \delta_{iM}$$

and wherein each bit $\delta_{ij}$ is defined by the following function F:

$$\delta_{ij} = 0 \qquad if\ \delta_{(i-1)j} = \alpha_{(i+1)j}$$

$$\delta_{ij} = 1 \qquad if\ \delta_{(i-1)j} \neq \alpha_{(i+1)j} \qquad\qquad (6)$$

or

$$\delta_{ij} = 1 \qquad if\ \delta_{(i-1)j} = \alpha_{(i+1)j}$$

$$\delta_{ij} = 0 \qquad se\ \delta_{(i-1)j} \neq \alpha_{(i+1)j} \qquad\qquad (6')$$

where $\alpha_{ij}$ are the digits defining the primary string parameters or the aggregated parameters of an aggregated parameter sequence obtained by combining primary string parameters.

15. The method of one or more of the previous claims, wherein the item to be recognized or classified is represented by a matrix of pixels; wherein each pixel represents a parameter of the item to be recognized or classified; and wherein the primary string is constituted by the concatenation of primary string parameters, each of which is constituted by a plurality of digits expressing a corresponding value of a respective pixel.

16. The method of claim 15, wherein the difference string is constituted by a series of parameters that are iteratively defined by

$$D_i = F[D_{i-1}; f_{i+1}(SBP)]$$

where f<sub>j</sub>(SBP) is defined by the sum

$$SR_j = \sum_{i=1}^{h} VA_{ij} \qquad (15)$$

or

$$SC_i = \sum_{j=1}^{k} VA_{ij} \qquad (18)$$

wherein $VA_{ij}$ are the values associated with the pixel in position i,j and $SC_i$ and $SR_i$ are the sums, by columns and rows respectively, of the values associated with the pixels.

17. The method of claim 15 or 16, wherein each difference string parameter is defined by a plurality of bits

$$D_i = \delta_{i1}, \delta_{i2}, ...... \delta_{ij}, ..... \delta_{iM}$$

and wherein each bit $\delta_{ij}$ is defined as follows:

$$\delta_{ij} = 0 \qquad if\ \delta_{(i-1)j} = \alpha_{(i+1)j}$$

$$\delta_{ij} = 1 \qquad if\ \delta_{(i-1)j} \neq \alpha_{(i+1)j} \qquad (6)$$

or

$$\delta_{ij} = 1 \qquad if\ \delta_{(i-1)j} = \alpha_{(i+1)j}$$

$$\delta_{ij} = 0 \qquad se\ \delta_{(i-1)j} \neq \alpha_{(i+1)j} \qquad (6')$$

where $\alpha_{ij}$ are the digits defining the parameters of the sum by rows $SR_i$ or of the sum by columns $SC_i$, of the values associated with the pixels, wherein each parameter of the sum $SCi$ or $SRi$ is defined by a plurality of m digits $\alpha_{ij}$ where j= 1 - m.

Fig.1

Fig.2

Fig.3

28 x 28 = 784

Europäisches
Patentamt

European
Patent Office

Office européen
des brevets

## EUROPEAN SEARCH REPORT

**Application Number**

**EP 22 16 6645**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/037877 A1 (JIA MENGLEI [US] ET AL) 14 February 2008 (2008-02-14) * paragraphs [0003], [0014], [0018], [0019] * | 1-15 | INV. G06F16/583 |
| X | LIU HAOMIAO ET AL: "Deep Supervised Hashing for Fast Image Retrieval", 2016 IEEE CONFERENCE ON COMPUTER VISION AND PATTERN RECOGNITION (CVPR), IEEE, 27 June 2016 (2016-06-27), pages 2064-2072, XP033021385, DOI: 10.1109/CVPR.2016.227 * section 3 * | 1-15 | |
| X | JORGE SANCHEZ ET AL: "High-dimensional signature compression for large-scale image classification", COMPUTER VISION AND PATTERN RECOGNITION (CVPR), 2011 IEEE CONFERENCE ON, IEEE, 20 June 2011 (2011-06-20), pages 1665-1672, XP032038006, DOI: 10.1109/CVPR.2011.5995504 ISBN: 978-1-4577-0394-2 * sections 2 and 3 * | 1-15 | |

| TECHNICAL FIELDS SEARCHED (IPC) |
|---|
| G06F |

The present search report has been drawn up for all claims

| Place of search | Date of completion of the search | Examiner |
|---|---|---|
| The Hague | 9 August 2022 | Correia Martins, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 16 6645

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2022

| Patent document cited in search report | | Publication date | Patent family member(s) | | Publication date |
|---|---|---|---|---|---|
| US 2008037877 | A1 | 14-02-2008 | CA | 2655242 A1 | 21-02-2008 |
| | | | CN | 101506843 A | 12-08-2009 |
| | | | EP | 2054855 A2 | 06-05-2009 |
| | | | JP | 2010500688 A | 07-01-2010 |
| | | | US | 2008037877 A1 | 14-02-2008 |
| | | | WO | 2008020919 A2 | 21-02-2008 |

EPO FORM P0459

For more details about this annex : see Official Journal of the European Patent Office, No. 12/82

**EP 4 071 635 A1**

**REFERENCES CITED IN THE DESCRIPTION**

**Patent documents cited in the description**

- US 2008003787 A